(19) Europäisches Patentamt
European Patent Office
Office européen des brevets

(11) Veröffentlichungsnummer: **0 062 899**
**B1**

(12) # EUROPÄISCHE PATENTSCHRIFT

(45) Veröffentlichungstag der Patentschrift: **31.10.84**

(51) Int. Cl.³: **C 09 D 3/82**, C 08 L 83/06, C 08 J 7/04, B 05 D 3/06

(21) Anmeldenummer: **82103006.1**

(22) Anmeldetag: **08.04.82**

(54) **Härtbare Überzugsmittel und Verfahren zur Herstellung kratzfester Überzüge auf Kunststoffen.**

(30) Priorität: **15.04.81 DE 3115198**

(43) Veröffentlichungstag der Anmeldung
**20.10.82 Patentblatt 82/42**

(45) Bekanntmachung des Hinweises auf die Patenterteilung:
**31.10.84 Patentblatt 84/44**

(84) Benannte Vertragsstaaten:
**AT BE CH DE FR GB IT LI NL SE**

(56) Entgegenhaltungen:
**AT - B - 355 321**
**DE - B - 2 522 241**
**DE - B - 2 544 860**
**US - A - 4 158 617**

(73) Patentinhaber: **BASF Aktiengesellschaft,**
**Carl-Bosch-Strasse 38, D-6700 Ludwigshafen (DE)**

(72) Erfinder: **Jaeckel, Klaus-Peter, Dr.,**
**Feuerbachstrasse 21, D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die vorliegende Erfindung betrifft härtbare Überzugsmittel auf Basis olefinisch ungesättigter Polysiloxane, Verfahren zur Herstellung kratzfester Überzüge auf Kunststoffen unter Verwendung dieser Überzugsmittel sowie nach diesen Verfahren beschichtete Kunststoffe.

Aus der DE-AS 1 957 357 sind Reaktionsprodukte aus ungesättigten Siloxanen mit olefinisch ungesättigten Epoxidharzen und/oder olefinisch ungesättigten Diurethanen und deren Härtung mit Elektronenstrahlen bekannt.

Weiterhin ist ein ähnlich aushärtbares System in der DE-AS 1 957 358 beschrieben, das aus einem olefinisch ungesättigten Siloxan und einem $\alpha,\beta$-olefinisch ungesättigten Polyester besteht. Die Filme sind gut ausgehärtet und witterungsbeständig, entsprechen jedoch in Abrieb- und Kratzfestigkeit keinesfalls den Anforderungen. So werden u. a. von den ausgehärteten Filmen Bleistifthärten von 9 H gefordert, die, wie Beispiel 1 der DE-AS 1 957 358 zeigt (Bleistifthärte H), von den vorbeschriebenen Überzügen bei weitem nicht erreicht werden.

Auch in der deutschen Patentanmeldung P 2 946 474.2 werden härtbare Überzugsmittel auf Basis olefinisch ungesättigter Polysiloxane vorgeschlagen.

Das Ziel der vorliegenden Erfindung war es, Überzugsmittel insbesondere für Kunststoffe wie Polymethylmethacrylat, Polycarbonate, Polystyrol, Styrol/Acrylnitril-Copolymerisate und Polyvinylchlorid zu entwickeln, die neben einer guten Haftung, Transparenz und einem guten Verlauf eine Abrieb- und Kratzfestigkeit aufweisen, die gegenüber den Produkten des Standes der Technik weiter verbessert ist. Die mechanische Beanspruchbarkeit der Kunststoffoberfläche sollte durch diese Überzüge so verbessert werden, daß transparente Kunststoffe als Glasersatz, vornehmlich in der Automobilindustrie Verwendung finden können.

Gegenstand der vorliegenden Erfindung sind härtbare Überzugsmittel auf Basis olefinisch ungesättigter Polysiloxane, die dadurch gekennzeichnet sind, daß das olefinisch ungesättigte Polysiloxan ein Polykondensationsprodukt ist aus

a) 50 bis 95 Mol-% eines olefinisch ungesättigten Silans der allgemeinen Formel

$$R^1—Si(OR^2)_3$$

wobei $R^1$ für einen über eine C — Si-Bindung an das Si-Atom gebundenen Vinyl- oder (Meth)Acrylsäure-$C_2$ — $C_8$-alkyl-ester-Rest und $R^2$ für Wasserstoff oder einen gesättigten Kohlenwasserstoffrest mit 1 bis 4 Kohlenstoffatomen stehen;

b) 5 bis 50 Mol-% eines gesättigten Silans der allgemeinen Formel

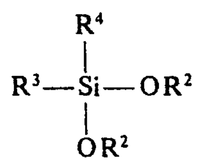

wobei $R^2$ die oben angegebene Bedeutung hat, $R^3$ und $R^4$ untereinander gleich oder verschieden sind und für gesättigte Kohlenwasserstoffreste mit 1 bis 6 Kohlenstoffatomen und gegebenenfalls $C_1$ — $C_4$-alkylsubstituierte aromatische Kohlenwasserstoffreste stehen, und

c) 0 bis 25 Mol-% eines epoxidgruppenhaltigen Silans mit mindestens 2 Hydroxi- oder Alkoxigruppen,

mit der Maßgabe, daß die Summe der unter a) bis c) genannten Prozentzahlen 100 ist, sowie derartige härtbare Überzugsmittel, die zusätzlich ein olefinisch ungesättigtes Umsetzungsprodukt aus (Meth)-Acrylsäure und Polyalkoholen bzw. Polyetherpolyolen in einem bis 8fachen Überschuß, bezogen auf die Gewichtsmenge des Polykondensats, enthalten.

Gegenstand der vorliegenden Erfindung ist außerdem ein Verfahren zur Herstellung kratzfester Überzüge auf Kunststoffoberflächen, wobei die erfindungsgemäßen härtbaren Überzugsmittel in üblicher Weise auf Kunststoffoberflächen aufgebracht und mittels ionisierender Strahlung oder durch Bestrahlung mit UV-Licht in Gegenwart üblicher Photoinitiatoren gehärtet werden.

Erfindungsgemäß werden ferner Gegenstände aus Kunststoff, die nach diesem Verfahren überzogen sind, beansprucht.

Mit den erfindungsgemäßen Überzugsmitteln gelingt es nach Härtung durch ionisierende Strahlung oder UV-Strahlung überraschenderweise auf Kunststoffen transparente, gut haftende, sehr harte Überzüge mit ausgezeichneter Abrieb- und Kratzfestigkeit herzustellen.

Zu den Aufbaukomponenten der erfindungsgemäßen Überzugsmittel ist im einzelnen folgendes auszuführen:

Das olefinisch ungesättigte Polysiloxan ist ein Polykondensationsprodukt aus den Komponenten (a), (b) und gegebenenfalls (c).

a) Geeignete olefinisch ungesättigte Silane der allgemeinen Formel

$$R^1—Si(OR^2)_3$$

wobei $R^1$ für einen über eine C — Si-Bindung an das Si-Atom gebundene Vinyl- oder (Meth)acrylsäure-$C_2$ — $C_8$-alkylesterrest und $R^2$ für Wasserstoff oder einen gesättigten Kohlenwasserstoffrest mit 1 bis 4 Kohlenstoffatomen stehen sind z. B. Vinyltrimethoxisilan, Vinyltriethoxysilan, γ-Methacryloxipropyltrimethoxisilan und γ-Methacryloxipropyltriethoxisilan, hiervon bevorzugt Vinyltriethoxisilan und γ-Methacryloxipropyltrimethoxisilan.
Komponente (a) wird zur Herstellung des erfindungsgemäßen Polykondensationsproduktes in Mengen von 50 bis 95, vorzugsweise 65 bis 94 Mol-%, bezogen auf die Summe der Prozentzahlen von (a) + (b) + (c) eingesetzt.

b) Geeignete gesättigte Silane der allgemeinen Formel

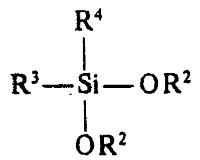

wobei $R^2$ die oben angegebene Bedeutung hat, $R^3$ und $R^4$ untereinander gleich oder verschieden sind und für gesättigte Kohlenwasserstoffreste mit 1 bis 6 Kohlenstoffatomen oder, gegebenenfalls $C_1$ — $C_4$-alkylsubstituierte, aromatische Kohlenwasserstoffreste stehen, sind beispielsweise Dimethyldimethoxisilan, Dimethyldiethoxysilan, Dimethyldibutoxisilan, Diphenyldimethoxisilan, Diphenyldiethoxisilan und Diphenyldibutoxisilan. Besonders bevorzugt ist Dimethyldibutoxisilan.
Komponente (b) bewirkt infolge ihrer Bifunktionalität einen gezielten linearen Aufbau des erfindungsgemäßen Polykondensationsproduktes und wird in einer Menge von 5 bis 50, vorzugsweise 6 bis 35 Mol-%, bezogen auf die Summe der Prozentzahlen von (a) + (b) + (c) eingesetzt.

c) Als epoxidgruppenhaltige Silane mit mindestens 2 Hydroxi- oder Alkoxigruppen kommen beispielsweise γ-Glycidoxipropyltrialkoxisilane mit 1 bis 4 Kohlenstoffatome enthaltenden Alkoxigruppen, wie γ-Glycidoxipropyltrimethoxisilan, γ-Glycidoxipropyltriethoxisilan, γ-Glycidoxipropyltributoxisilan, β-(3,4-Epoxicyclohexyl)ethyltrialkoxisilan mit 1 bis 4 Kohlenstoffatome enthaltenden Alkoxigruppen, wie β-(3,4-Epoxicyclohexyl)ethyltrimethoxisilan, -triethoxisilan, -tributoxisilan und Mischungen dieser Verbindungen in Frage. Bevorzugt als Komponente (d) ist γ-Glycidoxipropyltrimethoxisilan.

Komponente (c) kann zur Herstellung der erfindungsgemäßen Polykondensationsprodukte in Mengen von 0 bis 25, vorzugsweise 5 bis 15 Mol-%, bezogen auf die Summe der Prozentzahlen von (a) + (b) + (c) verwendet werden. Die Mitverwendung der Komponenten (c) trägt zur Verbesserung der Haftfestigkeit der Überzüge auf dem Substrat bei.

Zur Herstellung der erfindungsgemäßen Überzugsmittel werden die Komponenten (a) bis (c) zweckmäßigerweise in Gegenwart von mindestens 5fachem molaren Überschuß an Wasser säurekatalysiert cokondensiert, wobei zunächst das gesamte Reaktionsgemisch ca. 1 bis 8 Stunden auf 50 bis 80°C erhitzt und anschließend der entstandene Alkohol als Alkohol-Wasser-Azeotrop teils bei Normaldruck, teils unter vermindertem Druck abdestilliert wird.

Als saure Katalysatoren eignen sich die für Kondensationsreaktionen üblichen organischen und anorganischen Verbindungen, wie p-Toluolsulfonsäure, hypophosphorige Säure, Vanadinpentoxid, Antimontrioxid, Salzsäure oder Schwefelsäure.

Die erfindungsgemäßen Polysiloxane enthalten die in den folgenden Formeln aufgeführten Einheiten:

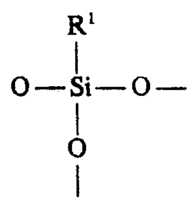

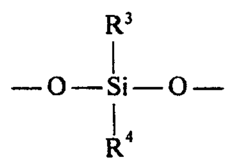

und ggf.

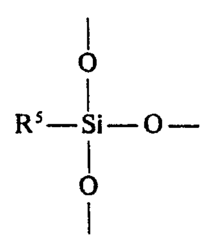

wobei $R^1$, $R^3$ und $R^4$ die oben angegebene Bedeutung haben und $R^5$ für epoxidgruppenhaltige organische Etherradikale mit einer Glycidylgruppe und einem 2 bis 8 Kohlenstoffatome enthaltenden Etherrest stehen.

Die erfindungsgemäßen Polykondensate weisen im allgemeinen Molekulargewichte zwischen 500 und 10 000, vorzugsweise zwischen 800 und 3000 auf.

Als Vernetzerkomponente können dem erfindungsgemäßen Polysiloxan mehrfach olefinisch ungesättigte Monomere zugesetzt werden, beispielsweise solche, die man durch Umsetzung von (Meth)Acrylsäure mit Polyolen bzw. Polyetherpolyolen erhält. Bevorzugte Monomere dieser Art sind Ethylenglykol-, Propandiol-, Butandiol-, Diethylenglykol-, Triethylenglykol-, Tetraethylenglykoldi(meth)acrylat; besonders bevorzugt sind Butandioldiacrylat und Tetraethylenglykoldiacrylat.

Diese zusätzlichen Vernetzerkomponenten können mit den erfindungsgemäßen olefinisch ungesättigten Polysiloxanen in bis zu achtfachem Überschuß, vorzugsweise 1 bis 6fachem Überschuß bezogen auf Polysiloxan kombiniert werden.

Die erfindungsgemäßen Überzugsmittel eignen sich zur Herstellung kratzfester Überzüge auf Kunststoffoberflächen, wie auf Polymethylmethacrylat, Polycarbonat, Polystyrol, SAN (= Styrol/Acrylnitril)-Copolymerisaten und Polyvinylchlorid.

Die Überzugsmittel werden durch übliche Applikationsverfahren wie Spritzen, Rakeln oder Tauchen auf das zu lackierende Substrat aufgebracht, wobei die Schichtdicke aus wirtschaftlichen Gründen 50µm nicht überschreiten sollte.

Die Aushärtung der Lackfilme erfolgt bevorzugt mit Hilfe ionisierender Strahlung, vorzugsweise in Form von Elektronenstrahlen mit einer Durchschnittsenergie von 100 000 bis 250 000 Elektronenvolt. Die Gesamtdosierung dieser Strahlung liegt im allgemeinen zwischen 3 und 20 Mrad.

Als Strahlungsquellen kommen die für die Elektronenstrahlhärtung von Lacken üblicherweise verwendeten in Frage.

Auch energiereiches Licht (UV-Strahlen) in Kombination mit üblichen Photoinitiatoren wie Benzophenon, Benzildimethylketal, 2-Hydroxi-2-methyl-propiophenon, Thioxanthon und dessen Derivate, Benzoinalkyläther sowie Kombinationen dieser Photoinitiatoren mit Synergisten (z. B. tert. Amine) kann die Vernetzungsreaktion zur Härtung der erfindungsgemäßen Überzüge initiieren.

Die Kunststoffoberflächen werden zweckmäßigerweise vor dem Lackieren sorgfältig gereinigt und getrocknet. Hierzu können die Platten z. B. zunächst mit spülmittelhaltigem Wasser gewaschen, anschließend mit Alkohol oder anderen organischen Lösungsmitteln, die die Kunststoffoberfläche nicht angreifen, von organischen Verunreinigungen befreit und danach 30 Minuten bei 50°C getrocknet werden. Die so gereinigten Platten lagert man zweckmäßig bis zur Verarbeitung in einem Exsikkator oder ähnlichen Behältern.

Die in den Beispielen angegebenen Teile und Prozente sind Gewichtsteile bzw. Gewichtsprozente.

## Beispiele 1 bis 3

Die in der Tabelle 1 angegebenen Silane rührt man in Gegenwart von vollentsalztem Wasser (10molarer Überschuß) und unter Zusatz von 0,5 Gew.-% p-Toluolsulfonsäure innerhalb der in Tabelle 1 angegebenen Zeit bei 50°C. Dann destilliert man den angefallenen Alkohol zusammen mit dem überschüssigen Wasser als Azeotrop bei einer Badtemperatur von 110°C ab, wobei gegen Ende die Reaktion unter vermindertem Druck durchgeführt wird.

Tabelle 1

| Beispiel Nr. | MEMO[1]) [Mol-%] | DMDBO[2]) [Mol-%] | K.-Zeit[3]) [h] | Viskosität (23°C) [mPas] |
|---|---|---|---|---|
| 1 | 80 | 20 | 5 | 7 332 |
| 2 | 50 | 50 | 3 | 915 |
| 3 | 68 | 32 | 2 | 2 848 |
| 4 | 91 | 9 | 2 | 16 050 |

[1]) γ-Methacroyloxipropyltrimethoxisilan (= MEMO).
[2]) Dimethyldibutoxisilan (= DMDBO).
[3]) Kondensationszeit.

## Beispiel 5 bis 8

Die in den Beispielen 1 bis 3 beschriebenen Bindemittel wurden unverdünnt mit Tetraethylenglykoldiacrylat (= TEGDA) in den in Tabelle 2 angegebenen Mischungsverhältnissen abgemischt. Jede

Mischung wurde auf eine sorgfältig gereinigte Polymethylmethacrylat-Platte (= PMMA) aufgerakelt, wobei die durchschnittliche Schichtdicke 8 bis 10 μm betrug. Die Härtung erfolgte in $N_2$-Atmosphäre durch Elektronenstrahlen mit einer Gesamtdosis von 10,6 Mrad.

Die Kratzfestigkeit der Lackfilme wurde nach der Sandfallmethode gemäß ASTM-D 673 (2000 g SiC der Körnung 80) geprüft.

Zur Bestimmung der Kratzfestigkeit diente die Trübungsmessung nach ASTM-D 1003 mittels des Trübungsmeßgerätes AUX-10 der Fa. Gardner. Hierfür wurde der angekratzte Lackfilm samt Substrat in den Strahlengang eines parallelen Lichtstrahles gebracht und der prozentuale Anteil des um mehr als 4° von der Horizontalen abweichenden Streulichts nach Abzug des Nullwertes als Maß für die Kratzfestigkeit angegeben.

Die Haftung bestimmte man durch die Gitterschnittmethode nach DIN 53 151, wobei abweichend von dieser noch zusätzlich die eingeritzten Quadrate mit Tesafilm überklebt und dieser ruckartig wieder entfernt wurde. Haftung = 0 bedeutet, daß der Lackfilm vollständig auf der Substratoberfläche haften bleibt; Haftung = 4, daß sich der Film vollständig abziehen läßt.

Die gemessenen Werte für Haftung und Kratzfestigkeit sind in Tabelle 2 zusammengefaßt.

Tabelle 2

| Beispiel-Nr. | Bindemittel aus Beispiel | Bindemittel zu TEGDA[1]) | Sandfall Δ % Trübung | Haftung |
|---|---|---|---|---|
| 5 | 1 | 1 : 1 | 1,2 | 0 |
| 6 | 2 | 1 : 3 | 1,1 | 0 |
| 7 | 3 | 1 : 6 | 1,5 | 0 |
| 8 | 4 | 1 : 3 | 0,9 | 0 |

[1]) Tetraethylenglykoldiacrylat.

Tabelle 3 zeigt im Vergleich hierzu die Trübungswerte von unbeschichtetem Polymethylmethacrylat (PMMA) und Glas im Sandfalltest.

Tabelle 3

| Substrat | Sandfall Δ % Trübung |
|---|---|
| PMMA | 36 |
| Glas | 5,8 |

Die gehärteten Lackfilme wurden von organischen Lösungsmitteln wie Toluol, Aceton, Butylacetat, Butanol und Testbenzin auch nach 24 Stunden Einwirkung nicht angegriffen.

**Patentansprüche**

1. Härtbare Überzugsmittel auf Basis olefinisch ungesättigter Polysiloxane, dadurch gekennzeichnet, daß das olefinisch ungesättigte Polysiloxan ein Polykondensationsprodukt ist aus

a) 50 bis 95 Mol-% eines olefinisch ungesättigten Silans der allgemeinen Formel

$$R^1{-}Si(OR^2)_3$$

wobei $R^1$ für einen über eine C — Si-Bindung an das Si-Atom gebundenen Vinyl- oder (Meth)Acrylsäure-$C_2$ — $C_8$-alkyl-ester-Rest und $R^2$ für Wasserstoff oder einen gesättigten Kohlenwasserstoffrest mit 1 bis 4 Kohlenstoffatomen stehen;

b) 5 bis 50 Mol-% eines gesättigten Silans der allgemeinen Formel

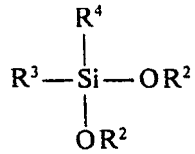

wobei $R^2$ die oben angegebene Bedeutung hat, $R^3$ und $R^4$ untereinander gleich oder verschieden sind und für gesättigte Kohlenwasserstoffreste mit 1 bis 6 Kohlenstoffatomen und gegebenenfalls $C_1-C_4$-alkylsubstituierte aromatische Kohlenwasserstoffreste stehen, und

c) 0 bis 25 Mol-% eines epoxidgruppenhaltigen Silans mit mindestens 2 Hydroxi- oder Alkoxigruppen,

mit der Maßgabe, daß die Summe der unter a) bis c) genannten Prozentzahlen 100 ist.

2. Härtbare Überzugsmittel nach Anspruch 1, dadurch gekennzeichnet, daß sie zusätzlich ein olefinisch ungesättigtes Umsetzungsprodukt aus (Meth)Acrylsäure und Polyalkoholen bzw. Polyetherpolyolen in einem bis 8fachen Überschuß, bezogen auf die Gewichtsmenge des Polykondensationsprodukts, enthalten.

3. Härtbare Überzugsmittel nach Anspruch 1 oder 2, dadurch gekennzeichnet, daß die Polykondensationsprodukte Molekulargewichte zwischen 500 und 10000 aufweisen.

4. Verfahren zur Herstellung kratzfester Überzüge auf Kunststoffoberflächen, dadurch gekennzeichnet, daß man die härtbaren Überzugsmittel nach Anspruch 1 oder 2 in üblicher Weise auf Kunststoffoberflächen aufbringt und mittels ionisierender Strahlung oder durch Bestrahlung mit UV-Licht in Gegenwart üblicher Photoinitiatoren härtet.

5. Gegenstände aus Kunststoff, die nach einem Verfahren gemäß Anspruch 4 überzogen sind.

**Claims**

1. A curable coating composition based on olefinically unsaturated polysiloxanes, wherein the olefinically unsaturated polysiloxane is a polycondensate of

a) from 50 to 95 mole% of an olefinically unsaturated silane of the general formula

$$R^1-Si(OR^2)_3$$

where $R^1$ is vinyl or a $C_2-C_8$-alkyl acrylate or methacrylate radical bonded to the Si atom via a C—Si bond and $R^2$ is hydrogen or a saturated hydrocarbon radical of 1 to 4 carbon atoms,

b) from 5 to 50 mole% of a saturated silane of the general formula

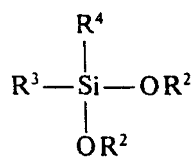

where $R^2$ has the above meanings and $R^3$ and $R^4$ are identical or different and each is a saturated hydrocarbon radical of 1 to 6 carbon atoms or an unsubstituted or $C_1-C_4$- alkyl-substituted aromatic hydrocarbon radical,
and

c) 0 to 25 mole% of an epoxide-containing silane with 2 or more hydroxyl or alkoxy groups, with 2 or more hydroxyl or alkoxy groups,
with the proviso that the sum of the percentages of a), b) and c) is 100.

2. A curable coating composition as claimed in claim 1, which additionally contains up to an 8-fold excess, based on the amount by weight of the poylcondensate, of an olefinically unsaturated reaction product of acrylic acid or methycrylic acid and a polyalcohol or polyether-polyol.

3. A curable coating composition as claimed in claim 1 or 2, wherein the polycondensate has a molecular weight of from 500 to 100000.

4. A process for the production of a mar-resistant coating on a plastics surface, wherein a curable coating composition as claimed in claim 1 or 2 is applied in a conventional manner to the plastics surface and is hardened by means of ionizing radiation or by exposure to ultraviolet light in the presence of a conventional photoinitiator.

5. An article made from a plastic and coated by a process as claimed in claim 4.

**Revendications**

1. Compositions de revêtement durcissables à base de polysiloxanes à insaturation oléfinique, caractérisées par le fait que le polysiloxane à insaturation oléfinique est un produit de polycondensation de

a) 50 à 95 % (moles) d'un silane à insaturation oléfinique de formule générale:

$$R^1—Si(OR^2)_3$$

$R^1$ représentant un reste d'ester alkylique en $C_2—C_8$ d'acide vinylique ou (meth) acrylique, lié à l'atome de Si par l'intermédiaire d'une liaison C — Si, et
$R^2$ représentant l'hydrogène ou un reste d'hydrocarbure saturé à 1 à 4 atomes de carbone;

b) 5 à 50 % (moles) d'un silane saturé de formule générale:

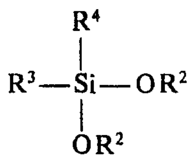

$R^2$ ayant la signification donnée plus haut,
$R^3$ et $R^4$ étant identiques ou différents et représentant des restes d'hydrocarbures saturés à 1 à 6 atomes de carbone ou éventuellement des restes d'hydrocarbures aromatiques substitués par un alkyle en $C_1—C_4$, et

c) 0 à 25 % (moles) d'un silane contenant des groupes époxy avec au moins deux groupes hydroxy ou alcoxy

sous réserve que la somme des pourcentages indiqués sous a) à c) soit égale à 100.

2. Compositions de revêtement durcissables selon la revendication 1, caractérisées par le fait qu'elles contiennent additionnellement un produit insaturé oléfiniquement, de réaction d'acide (meth) acrylique et de polyalcools ou polyétherpolyols, en excès allant jusqu'à 8 fois, rapporté au poids du produit de polycondensation.

3. Compositions de revêtement durcissables selon la revendication 1 ou 2, caractérisées par le fait que les produits de polycondensation ont des poids moléculaires compris entre 500 et 10 000.

4. Procédé d'obtention de revêtement résistants à la rayure sur des surfaces en matière plastique, caractérisé par le fait que l'on applique les revêtements durcissables selon la revendication 1 ou 2, de manière usuelle, sur les surfaces de matière plastique et qu'on les durcit au moyen d'un rayonnement ionisant ou par irradiation à la lumière UV en présence de photoinitiateurs usuels.

5. Objets en matière plastique, qui ont été revêtus par un procédé selon la revendication 4.